# EUROPÄISCHE PATENTANMELDUNG

(11) **EP 4 245 975 A1**
(43) Veröffentlichungstag der Anmeldung: **20.09.2023**
(21) Anmeldenummer: 23160732.6
(22) Anmeldetag: 08.03.2023
(51) Int. Cl.: F02B 19/10, F02D 19/02, F02M 21/02

(54) **GASBRENNKRAFTMASCHINE MIT BRENNGASREKUPERATION**

(30) Priorität: 15.03.2022 CH 2782022
(71) Anmelder: Liebherr Machines Bulle SA, 1630 Bulle (CH)
(72) Erfinder: Seba, Bouzid, 1632 Riaz (CH); Noca, Alix, 1700 Fribourg (CH); Baert, Michael-Alexandre, 1996 Courgevaux (CH)
(74) Vertreter: von Tietzen und Hennig, Nikolaus

(57) **Zusammenfassung**

Die Erfindung betrifft Gasbrennkraftmaschine mit mindestens zwei Brennräumen, mindestens einem gemeinsam genutzten Kraftstoff-Hochdruckspeicher zur Bereithaltung von Brenngas als Druckgas, sowie Mitteln zur Direkteinspritzung des Brenngases aus dem Kraftstoff-Hochdruckspeicher in die mindestens zwei Brennräume, wobei das Brenngas im Kraftstoff-Hochdruckspeicher aus einem Primärtank bereitstellbar ist, wobei das Brenngas aus dem Primärtank entnehmbar und/oder aus einem aus dem Primärtank entnommenen Kraftstoff entlang eines Konversionspfads erzeugbar ist, dadurch gekennzeichnet, dass wenigstens ein mit dem Kraftstoff-Hochdruckspeicher verbundener Gaszwischenspeicher vorgesehen ist, um Brenngas aus dem Kraftstoff-Hochdruckspeicher in den Gaszwischenspeicher zum Zwecke einer Druckabsenkung im Kraftstoff-Hochdruckspeicher abzuführen, und der Gaszwischenspeicher ferner über einen separaten Brenngaspfad mit dem Luftansaugtrakt der Gasbrennkraftmaschine verbunden ist, über den Brenngas aus dem Gaszwischenspeicher in den Luftansaugtrakt zuführbar ist.

## Beschreibung

Die Erfindung betrifft eine Gasbrennkraftmaschine mit mindestens zwei Brennräumen, mindestens einem gemeinsam genutzten Kraftstoff-Hochdruckspeicher zur Bereithaltung von Brenngas als Druckgas sowie Mitteln zur Direkteinspritzung des Brenngases aus dem Kraftstoff-Hochdruckspeicher in die mindesten zwei Brennräume, wobei das Brenngas im Kraftstoff-Hochdruckspeicher aus einem Primärtank bereitstellbar ist, wobei das Brenngas aus dem Primärtank entnehmbar und/oder aus einem aus dem Primärtank entnommenen Kraftstoff entlang eines Konversionspfads erzeugbar ist.

Der Druck des im Kraftstoff-Hochdruckspeicher bereitgehaltenen Brenngases wird zumeist als Raildruck bezeichnet. Dieser wird an den jeweiligen Kraftstoffmomentanverbrauch, der sich massgeblich aus dem aktuellen Drehzahl-Drehmoment-Arbeitspunkt der Gasbrennkraftmaschine ergibt, angepasst. Eine Erhöhung des Raildrucks verkürzt die notwendige Öffnungsdauer eines Injektors, d.h. das Öffnungszeitfenster bis jeweils eine bestimmte Brenngasmenge dem Brennraum zugeführt worden ist.

Generell bietet eine Verkürzung der Einspritzdauer einen größeren Freiraum und damit weitläufigeren Bereich für eine Optimierung zur Festlegung des Zeitfensters bzw. des Kurbelwellen-Winkelbereiches, in dem die aktuell vorgesehene Brenngas-Portionsmenge einer jeweiligen Brenngaseinspritzung während eines Zylinderarbeitszyklus vorgenommen werden soll. Im Falle einer hohen Motordrehzahl und gleichzeitigem Vorliegen eines hohen Motor-Abgabedrehmomentes, d.h. eines hohen Brenngasbedarfes, in Verbindung mit einem vergleichsweise niedrigen Raildruck wäre das Durchführen von Nebeneinspritzungen unter Umständen gar nicht mehr möglich. Im Extremfall wäre der verfügbare Zeitraum nicht einmal ausreichend, um dem betreffenden Brennraum im aktuellen Arbeitsspiel das erforderliche Quantum an Brenngas (sich auf die Haupteinspritzung beziehend) zuzuführen.

Nachteile würden aber auch dann bestehen, sofern beim Betreiben einer Gasbrennkraftmaschine permanent ein Raildruck bereitgestellt wird, der annährend oder hinreichend groß ist, um den Brenngasbedarf der Gasbrennkraftmaschine in jedem Lastbereich abdecken zu können. Einer der zahlreichen Nachteile, der sich für eine derartige Betriebsweise ergeben würde, ist die Konsequenz, dass im mittleren und besonders im unteren Lastbereich der Gasbrennkraftmaschine stets besonders hohe Abweichungen zwischen der tatsächlich benötigten und der sich real ergebenden Brenngasmenge, die bei einer Einspritzung dem jeweiligen Brennraum zugeführt wird, auftreten. Der technische Hintergrund hierfür ist denkbar einfach. Bei einem vollständig geöffneten Injektor ist die Reproduzierbarkeit des durch den Injektor strömenden Volumenstroms vergleichsweise hoch. Während der Übergangszustände zwischen dem Öffnen und dem Schliessen ist die Reproduzierbarkeit des durch den Injektor strömenden Volumenstroms deutlich schlechter. Demzufolge wirkt sich - klarerweise innerhalb der hierfür zur Verfügung stehenden Bandbreite - eine Verlängerung der Injektor-Öffnungsdauer positiv auf das Einhalten der Brenngas-Einspritz-Sollmenge aus.

Demnach bieten einerseits kurze Zeiträume innerhalb derer ein bestimmtes Quantum eingespritzt worden ist einen Vorteil, wohingegen andererseits lange Zeiträume vorteilhaft sind. Folglich besteht für eine jeweils konkrete Einspritzmenge eine kleine individuelle Bandbreite oder gar ein einziger Wert einer optimalen Brenngas-Einspritzdauer. Anhand dieser Dauer ergibt sich ein Raildruck-Sollwert. Je genauer letzterer Sollwert vorliegt, umso näher kann der Sollwert der Brenngas-Einspritzdauer dem jeweiligen Optimalwert angenähert werden. Möglicherweise ist der Optimalwert der Brenngas-Einspritzdauer abhängig von der Brenngasmenge, die in dem betreffenden Einspritzvorgang dem Brennraum zugeführt werden soll. Der Zeitraum bzw. der Kurbelwellenwinkelbereich, innerhalb dessen eine bestimmte Brenngasmenge in den betreffenden Brennraum zugeführt werden soll, kann wiederum abhängig von von sich selbst, d.h. der Brenngasmenge sein. Es ist denkbar, dass weitere Bedingungen berücksichtigt werden müssen, um das jeweilige Zeitfenster einer Brenngaseinspritzung tatsächlich optimal festlegen zu können.

Bei Kraftstoffen, die unter gewöhnlichen Temperaturbedingungen, bspw. in einem Temperaturbereich von -20° C und 50° C in Flüssigform im Haupttank gespeichert werden (wie bspw. Diesel, Diesel-ähnliche Kraftstoffe, Benzin), ist das Zurückführen von dem Kraftstoff-Hochdruckspeicher in den Haupttank technisch vergleichsweise einfach durchführbar.

Doch es gibt auch solche Kraftstoffe, bei denen in mobilen Anwendungen das Rückführen in den Haupttank nicht praktikabel ist. Gesellschaftspolitische und naturgegebene Rahmenbedingungen führen dazu, dass nun auch vermehrt solche Kraftstoffe zur Anwendung kommen werden, für die Letzteres zutreffend ist. Beispiele hierfür sind (i) gasförmige Kraftstoffe, die als Druckgas oder Flüssiggas mitgeführt werden oder (ii) Kraftstoffe, die erst durch eine On-board Reformierung als solches bereitgestellt werden. Konkrete Beispiele für (i) sind Druckwasserstoff, CNG = Compressed Natural Gas, Flüssigwasserstoff, LNG = Liquified Natural Gas und für (ii) Ammoniak.

Die Aufgabe der vorliegenden Erfindung ist darin zu sehen, für Gasmotoren, die mit einem Common Rail System ausgestattet sind, eine Möglichkeit zu schaffen, um das Brenngas, welches aufgrund einer erforderlichen Raildruckabsenkung aus dem Kraftstoff-Hochdruckspeicher abgeführt werden muss, im Fortbetrieb des Gasmotors nutzen zu können, dies jedoch ohne die Notwendigkeit einer aufwendigen Rekonditionierung des Brenngases.

Gelöst wird diese Aufgabe durch eine Gasbrennkraftmaschine gemäß den Merkmalen des Anspruch 1. Vorteilhafte Ausführungen der Gasbrennkraftmaschine sind Gegenstand der abhängigen Ansprüche.

Erfindungsgemäß wird vorgeschlagen, dass die Gasbrennkraftmaschine um wenigstens einen zusätzlichen, mit dem Kraftstoff-Hochdruckspeicher verbundenen Gaszwischenspeicher erweitert wird. In diesen Gaszwischenspeicher soll Brenngas, insbesondere sich im Kraftstoff-Hochdruckspeicher befindendes überschüssiges Brenngas abgeführt werden, um dadurch eine beabsichtigte Druckabsenkung im Kraftstoff-Hochdruckspeicher erreichen zu können. Anders als bei konventionellen Brennkraftmaschinen mit Common Rail System wird somit überschüssiger Kraftstoff resp. überschüssiges Brenngas aus dem Kraftstoff-Hochdruckspeicher nicht in den Primärtank zurückgespeist, sondern stattdessen im zusätzlichen Gaszwischenspeicher zwischengespeichert. Ferner erfindungsgemäß wird vorgeschlagen, dass der Gaszwischenspeicher über einen separaten Brenngaspfad mit dem Luftansaugtrakt der Gasbrennkraftmaschine zur dortigen Brenngas-Zuführung verbunden ist. Dementsprechend besteht die Möglichkeit, das im Gaszwischenspeicher gepufferte Brenngas für den regulären Motorbetrieb bereitzuhalten. Es wird dadurch eine zur bestehenden Direkteinspritzung zusätzliche Möglichkeit einer alternativen oder ergänzenden Brenngaszufuhr geschaffen und zwar über den Luftansaugtrakt.

Durch diese Maßnahme kann auf eine entsprechende aufwändige Rekonditionierung des Brenngases verzichtet werden, da eine Rückführung in den Primärtank erst gar nicht vorgesehen ist. Das aus dem Kraftstoff-Hochruckspeicher zum Zwecke der Druckabsenkung abgeführte Brenngas kann dennoch rekuperiert werden und von der Gasbrennkraftmaschine genutzt werden. Die Erfindung erweist sich insbesondere als sinnvoll, wenn als Brenngas *Wasserstoff* eingesetzt wird, resp. wenn im Primärtank ein solcher Kraftstoff bzw. Energieträger mitgeführt wird, der entlang seines Bereitstellungspfades zu Wasserstoff umgewandelt wird.

In der Beschreibung der Erfindung wird, in sinngemässer Übereinstimmung mit der Begriffswahl, der Kraftstoff in seiner dahingehend aufbereiteten Form, die von der Gasbrennkraftmaschine verbrennungsmotorisch genutzt werden kann, d.h. am Ende eines möglichen Kraftstoff-Konversionspfades, als Brenngas bezeichnet. Zweck Erzielung einer Klarheit wird das Ende dieses möglichen Konversionspfades mit dem Eintritt des Kraftstoffs in den Kraftstoff-Hochdruckspeicher festgelegt. Innerhalb des Kraftstoff-Hochdruckspeichers und strömungsabwärts davon wird anstelle des Begriffs Kraftstoff daher die Bezeichnung Brenngas verwendet. Im Primärtank kann der Kraftstoff bspw. als verflüssigtes Gas oder in einer chemischen Bindung gespeichert sein, die sich von der chemischen Bindung des Brenngases unterscheidet. Die Art des Primärtanks und der davon ausgehende Zuführungspfad zum Kraftstoff-Hochdruckspeicher stehen nicht im Fokus der hier vorliegenden Erfindung.

Das im Gaszwischenspeicher vorgehaltene Brenngas kann über den separaten Brenngaspfad kontrolliert in den Luftpfad der Gasbrennkraftmaschine zugeführt werden. Mit Bezug auf die Hauptströmungsrichtung der Luft kann der Ort jener Zuführung vor oder nach einer Entzweigung des Luftpfadsystems erfolgen. Im erstgenannten Fall spricht man von einer (Single-Point-Einspritzung) und andernfalls von einer Multi-Point-Einspritzung, wobei in der letzteren Art einerseits die Möglichkeit besteht, dass ein Einspeiseort zur Versorgung mehrerer Brennräume dient oder andererseits für jeden Brennraum eine dedizierte Einspeisung vorhanden ist.

Zur Realisierung einer Direkteinspritzung wird das Brenngas zunächst einem Kraftstoff-Hochdruckspeicher zugeführt, um ihn darin auf einem Solldruckniveau bereitzuhalten. Von dort aus gelangt es über einen jeweiligen Injektor in den funktional zugeordneten Brennraum. Denkbar ist auch eine Umsetzung der Erfindung in einer Gasbrennkraftmaschine, die zusätzlich zu einer Direkteinspritzung über Vorkammern verfügt. Im Fall aktiver Vorkammern können diese und der jeweils funktional zugeordnete Brennraum, Letzterer hier zur Verdeutlichung als Hauptbrennraum bezeichnet über separate bzw. sich verzweigende Brenngaspfade aus einem Kraftstoff-Hochdruckspeicher mit dem Brenngas versorgt werden. Klarerweise könnten für die beiden Brenngasversorgungen auch separate Kraftstoff-Hochdruckspeicher vorhanden sein. Mit Bezug auf eine solche Gasbrennkraftmaschine, die einen Brenngaspfad aufweist, bei dem der Injektorauslass sich innerhalb der Vorkammer befindet über den eine unmittelbare Brenngaszuführung in die Vorkammer vorgesehen ist, kann jener Brenngaspfad derart umgesetzt sein, dass hierüber auch eine mittelbare, sich durch die Vorkammer und die Überströmkanäle erstreckende Brenngaszuführung in den Hauptbrennraum möglich ist. In diesem Fall wird eine solche Ausführungsform bevorzugt, bei der - abgesehen von dem möglichen sich über den Gaszwischenspeicher und Saugeingang erstreckenden Brenngaspfad - zwischen dem Kraftstoff-Hochdruckspeicher und dem Hauptbrennraum lediglich ein einziger Brenngaspfad existiert, wobei dieser einzige Pfad dann klarerweise zunächst in die Vorkammer mündet und sich dann über den mindestens einen Überströmkanal fortsetzt. Das wiederum bedeutet, dass jener vom Kraftstoff-Hochdruckspeicher sich über die Vorkammer erstreckende Teilabschnitt des Brenngaspfades derart ausgeführt sein muss, um einen deutlich grösseren Brenngas-Volumenstrom zu ermöglichen als dies für einen solchen Pfad nötig wäre, der lediglich eine solche Brenngaszuführung bewältigen kann, die zur lediglich Erfüllung der Vorkammerfunktion ausreichend ist.

Entlang des den Gaszwischenspeicher und den Kraftstoff-Hochdruckspeicher verbindenden Brenngaspfads kann ein Ventil eingebunden sein, um den Brenngas-Zustrom zwischen beiden Speichern zu regulieren. Denkbar ist die Verwendung eines solchen Ventils bspw. in der Ausführungsform eines Proportionalventils, welches die Vorgabe des Volumen- oder Massenstroms ermöglicht. Ebenso kann entlang des vom Gaszwischenspeicher ausgehenden Brenngaspfades zur Einleitung des Brenngases in den Luftansaugtrakt der Gasbrennkraftmaschine ein Ventil integriert sein. Auch dieses Ventil kann als Aktuator zur Einstellung oder der Regelung des Volumen- oder Massenstroms zwischen Gaszwischenspeicher und Luftansaugtrakt fungieren. Von Vorteil ist es, wenn der Volumenstrom durch das zwischen dem Kraftstoff-Hochdruckspeicher und dem Gaszwischenspeicher angeordnete Ventil unabhängig von der jeweils bestehenden Druckdifferenz der innerhalb dieser beiden Speicher eingeschlossenen Brenngasmengen definiert variierbar ist, wobei diesbezüglich klarerweise Grenzen bestehen. Denn bspw. reduziert sich klarerweise die Bandbreite einer Variierbarkeit bei einer Verkleinerung der besagten Druckdifferenz. Entsprechendes gilt bevorzugt oder alternativ für das zwischen Gaszwischenspeicher und Luftansaugtrakt angeordnete Ventil und den entsprechenden Brenngas-Volumenstrom.

Gemäß einer optionalen Ausführungsform kann ebenso vorgesehen sein, dass entlang desjenigen Brenngaspfades, über den der Kraftstoff-Hochdruckspeicher und der Gaszwischenspeicher verbunden sind, wenigstens ein Verdichter integriert ist. Über den zwischengeschalteten Verdichter kann das im Gaszwischenspeicher vorhandene Brenngas entnommen und in verdichteter Form dem Kraftstoff-Hochdruckspeicher zurückgeführt werden. Eine solche Rückführung ist bspw. dann besonders vorteilhaft, wenn eine vom Primärtank ausgehende Brenngas-Zuführung in den Kraftstoff-Hochdruckspeicher nicht mehr möglich ist bzw. nicht mehr in einem ausreichenden Mass möglich ist. Jene Möglichkeit einer solchen Rückführung stellt eine wichtige Grundlage für die Realisierung eines Not- bzw. Reservebetriebs dar.

In einer bevorzugten Ausführungsform kann der Gaszwischenspeicher nur über den Kraftstoff-Hochdruckspeicher mit Brenngas versorgbar sein. Alternativ kann jedoch eine Aufladung des Gaszwischenspeichers auch über einen gesonderten Fluidpfad erfolgen, beispielsweise aus dem Primärtank des Gesamtsystems, das bspw. eine mobile Arbeitsmaschine sein kann.

In einer bevorzugten Ausführungsform ist eine Steuerung vorgesehen, die konfiguriert ist, bestimmte Brenngas-Zuflüsse zu regeln; z.B. den vom Kraftstoff-Hochdruckspeicher ausgehenden und in den Gaszwischenspeicher mündenden Brenngas-Volumen- oder Massenstrom. Insbesondere erfolgt eine durch die Regelung vorgegebene Ansteuerung des entlang des Brenngaspfades zwischen dem Kraftstoff-Hochdruckspeicher und dem Gaszwischenspeicher angeordneten Ventils in Abhängigkeit davon, ob der Istdruck im Kraftstoff-Hochdruckspeicher größer als der betreffende Solldruck ist oder eine Übereinstimmung jener Werte vorliegt. Ein Brenngas-Zufluss vom Kraftstoff-Hochdruckspeicher in den Gaszwischenspeicher kann jedoch auch dann vorgesehen sein, wenn der Istdruck im Kraftstoff-Hochdruckspeicher zwar einen geringeren Wert als der betreffende Sollwert aufweist, jedoch einen definierten Schwellenwert übertrifft, der wiederum kleiner als der betreffende Sollwert dimensioniert ist.

Ferner kann die Steuerung derart konfiguriert sein, dass ein Öffnen des entlang des Brenngaspfades zwischen dem Kraftstoff-Hochdruckspeicher und dem Gaszwischenspeicher angeordneten Ventils nur dann erfolgen kann, sofern der Druck im Kraftstoff-Hochdruckspeicher höher ist als im Gaszwischenspeicher.

Die Steuerung kann ebenso zur Einstellung des sich strömungstechnisch zwischen dem Gaszwischenspeicher und dem Luftansaugtrakt befindenden Ventils dienen, worüber die Einstellung des vom Gaszwischenspeicher ausgehenden und den Luftansaugtrakt erreichenden Volumen-/Massenstroms erfolgt. Denkbar ist es beispielsweise, dass ein Öffnen jenes Ventils nur dann erfolgen soll/kann, wenn der Druck im Gaszwischenspeicher höher ist als der Druck im Luftansaugtrakt. Ferner kann eine Ansteuerung des strömungstechnisch zwischen dem Gaszwischenspeicher und dem Ansaugtrakt angeordneten Ventils in Abhängigkeit des Istdrucks im Kraftstoff-Hochdruckspeicher vorgenommenen werden. Vorzugsweise besteht in diesem Fall für den Kraftstoff-Hochdruckspeicher eine Innendruck-Überwachung, die eine Voraussetzung dafür bildet, dass eine Freigabe zum Öffnen jenes Ventils nur dann vorliegen kann, sofern der Istdruck innerhalb des Kraftstoff-Hochdruckspeichers kleiner oder gleich seines betreffenden Sollwertes ist. Besonders bevorzugt muss der Istdruck den entsprechenden Sollwert für den Kraftstoff-Hochdruckspeicher um einen definierten Schwellenwert unterschreiten.

Ein solcher Schwellenwert kann beispielsweise dynamisch definiert sein und abhängig vom aktuellen Betriebszustand der Gasbrennkraftmaschine festgelegt werden. Denkbar ist beispielsweise eine Definition des Schwellenwertes abhängig vom Istdruck im Gaszwischenspeicher und/oder eines Differenzbetrages zwischen Ist- und Solldruck im Kraftstoff-Hochdruckspeicher.

Die Steuerung kann weiterhin konfiguriert sein, die Einspritzmenge in den Luftansaugtrakt auf einen in Abhängigkeit des Lastmomentes, bspw. eines rechnerisch ermittelten, vom Gasmotor abgeforderten Drehmoments, und/oder in Abhängigkeit des Füllstands des Gaszwischenspeichers ermittelten Sollwert zu regeln. Vorausgesetzt einer entsprechenden Brenngas-Verfügbarkeit im Gaszwischenspeicher kann bei einer Regelung in Abhängigkeit des Lastmomentes zusätzlich Brenngas in den Luftansaugtrakt eingespritzt werden, sofern die Sollleistung der Gasbrennkraftmaschine allein durch die Direkteinspritzung nicht erfüllt werden kann. Auch kann vorgesehen sein, jene Brenngas-Zuführungsmenge in den Luftansaugtrakt in Abhängigkeit des Gasdrucks innerhalb des Gaszwischenspeichers zu beeinflussen. Hierbei soll berücksichtigt werden, dass eine Ableitung von Brenngas aus dem Kraftstoff-Hochdruckspeicher in den Gaszwischenspeicher nur dann möglich ist, wenn der im Gaszwischenspeicher bestehende Innendruck einen bestimmten Schwellenwert nicht überschreitet. Um das Erreichen jenes Schwellenwerts zu vermeiden, wird bereits ab einer gewissen Nähe zu diesem Schwellenwert auch bei dem Vorliegen eines geringeren Brenngas-Momentanverbrauchs dem Luftansaugtrakt bereits Brenngas zugeführt, um dadurch ein gewisses Quantum im Gaszwischenspeicher freizuhalten, damit überschüssiges Brenngas aus Kraftstoff-Hochdruckspeicher, was im Fall einer entsprechenden Sollwertabsenkung des Raildrucks anfällt, im Gaszwischenspeicher aufgenommen werden kann.

Neben der erfindungsgemäßen Gasbrennkraftmaschine betrifft die vorliegende Erfindung eine Arbeitsmaschine, insbesondere eine mobile Arbeitsmaschine, die mit einer erfindungsgemässen Gasbrennkraftmaschine betrieben wird, wobei die Gasbrennkraftmaschine der Arbeitsmaschine vorzugsweise als Antriebsmotor für das Ausführen von Fahrbewegungen und das Betätigen von Arbeitsgeräten zur Anwendung kommt. Für das Anwendungsbeispiel Bagger wären das die beiden Kettenantriebe, das Drehen des Oberwagens sowie die Heb- und Senkbewegungen des Hubs, des Stils und des Löffels.

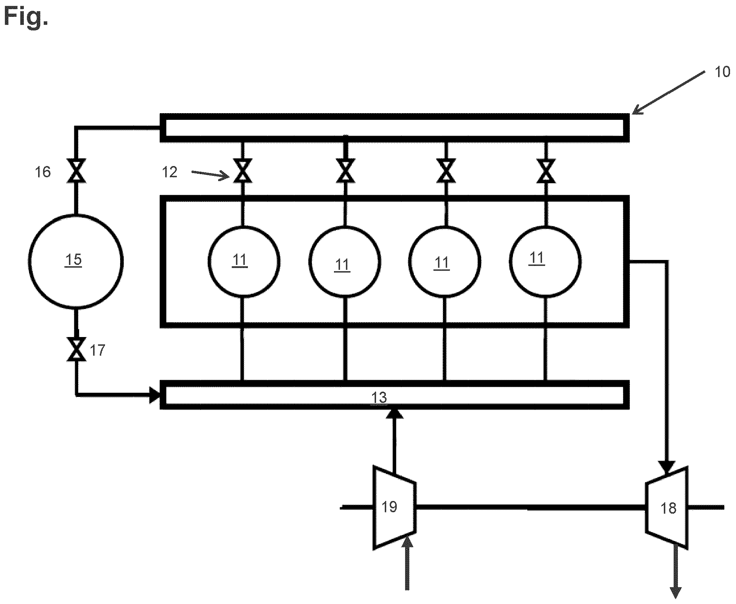

Weitere Vorteile und Eigenschaften der Erfindung sollen nachfolgend anhand eines in der einzigen Figur dargestellten Ausführungsbeispiels näher erläutert werden. Die einzige Figur zeigt den schematischen Aufbau einer erfindungsgemäßen Gasbrennkraftmaschine.

Die Figur zeigt einen schematischen Aufbau einer erfindungsgemässen Gasbrennkraftmaschine am Beispiel einer einstufig aufgeladenen 4-Zylinder Verbrennungskraftmaschine. Eine erfindungsgemässe Gasbrennkraftmaschine kann mit einem Common Rail System ausgestattet sein. Zwecks Vereinfachung sind lediglich der von den vier Brennräumen 11 gemeinsam genutzte Kraftstoff-Hochdruckspeicher 10 und die vier als Ventilsymbol symbolisierten Injektoren 12 abgebildet, derweil der Kraftstoffzuführungspfad vom Primärtank in den Kraftstoff-Hochdruckspeicher 10 nicht dargestellt ist. Dieser steht, wie eingangs bereits erwähnt, nicht im Fokus der Erfindung. Verbrennungsluft wird den Brennräumen 11 über den gemeinsamen Luftverteiler 13 bereitgestellt. Die mittels des Abgaspfades angetriebene Turbine 18 treibt den Verdichter 19 an, der die angesaugte Luft komprimiert und dem Luftverteiler 13 zuführt.

Abweichend zu einer vorbekannten Gasbrennkraftmaschine existiert zwischen dem Kraftstoff-Hochdruckspeicher 10 und dem Luftverteiler 13 ein über einen Gaszwischenspeicher 15 und über zwei Ventile 16, 17 geführter Brenngaspfad. Der Brenngaspfad zwischen dem Kraftstoff-Hochdruckspeicher 10 und dem Gaszwischenspeicher 15 kann über das Ventil 16 geöffnet oder geschlossen werden. Gleichermassen kann der Brenngaspfad zwischen dem Gaszwischenspeicher 15 und dem Luftverteiler 13 mittels des Ventils 17 geöffnet oder geschlossen werden. In Bezug auf diese Erweiterung ist es lediglich vorgesehen, dass Brenngas von dem Kraftstoff-Hochdruckspeicher 10 kommend in den Gaszwischenspeicher 15 zuströmt und Brenngas von dem Gaszwischenspeicher 15 kommend in den Luftverteiler 13 einströmt.

In einer möglichen Ausführungsform der Erfindung sind für den Gaszwischenspeicher 15 drei Betriebszustände vorgesehen:

### Betriebszustand 1: Zuführen von Brenngas in den Gaszwischenspeicher 15.

Das Ventil 16 darf bzw. kann geöffnet werden, sofern der Raildruck höher als der Druck innerhalb des Gaszwischenspeichers 15 ist. Ein Öffnen des Ventils 16 ist dann vorgesehen, wenn eine Absenkung des Raildrucks beabsichtigt wird. Ergänzend kann vorgesehen sein, dass ein Öffnen des Ventils 16 auch dann möglich ist, wenn der Raildruck-Istwert seinen Sollwert erreicht hat bzw. wenn der Raildruck-Istwert einen bestimmten, sich unterhalb des Sollwert befindenden Schwellenwert überschritten hat. In einer vorteilhaften Ausführungsform ist ein Öffnen des Ventils 16, sofern sich der Raildruck-Istwert unterhalb des Sollwerts, aber noch oberhalb eines entsprechenden Schwellenwerts befindet, nur dann möglich, wenn ein weiteres Kriterium erfüllt ist. Hierbei kann es sich um ein Kriterium handeln, welches sich wiederum aus einer Verknüpfung mehrerer Einzelkriterien ergibt. Eine solche Verknüpfung kann bspw. auf einer Boolschen Algebra beruhen bis hin zu einem komplexen Kriterium, welches bspw. eine Lastprädiktion umfasst.

### Betriebszustand 2: Entnahme von Brenngas aus dem Gaszwischenspeicher 15.

Eine Grundvoraussetzung für das Öffnen des Ventils 17 ist, dass der Druck innerhalb des Gaszwischenspeichers 15 höher als der Druck im Luftverteiler 13 ist. In einer möglichen Ausführungsform der Erfindung ist es vorgesehen, dass im Fall einer Sollabgabeleistung der Gasbrennkraftmaschine, die (momentan) durch das alleinige Beziehen von Brenngas über die Direkteinspritzung mittels der Injektoren 12 nicht abgedeckt werden kann, eine zusätzliche Brenngaszuführung aus dem Gaszwischenspeicher 15 vorgenommen werden kann. In einer Weiterbildung kann es vorgesehen sein, dass ein Öffnen des Ventils 17 erst dann erfolgen kann, wenn der Raildruck-Istwert seinen Sollwert um einen bestimmten Schwellenwert unterschritten hat. In einer vorteilhaften Ausführungsform handelt es sich nicht um einen konstanten Schwellenwert. Hierbei kann der Schwellenwert abhängig von dem Istdruck im Gaszwischenspeicher 15 sein. Ergänzend oder alternativ kann der Schwellenwert abhängig von der Abweichung zwischen dem Istwert und dem Sollwert des Raildrucks sein. In einer besonders vorteilhaften Ausführungsform können weitere Istgrössen eine Auswirkung auf den jeweiligen Schwellenwert ausüben. Alternativ oder ergänzend zu kontinuierlichen Istgrössen und/oder Abweichungen zwischen Ist- und Sollwerten kann mindestens ein weiteres Kriterium hinzukommen, welches eine Beeinflussung auf die Nutzung von im Gaszwischenspeicher 15 enthaltenen Brenngas hat, wobei es sich um ein solches Kriterium handeln kann, welches sich wiederum aus einer Verknüpfung mehrerer Einzelkriterien ergibt. Eine solche Verknüpfung kann bspw. auf einer Boolschen Algebra beruhen bis hin zu einem komplexen Kriterium, welches bspw. eine Lastprädiktion umfasst.

### Im Betriebszustand 3 wird dem Gaszwischenspeicher 15 weder Brenngas entnommen noch zugeführt.

In allen Ausführungsformen bzw. allen Weiterbildungen der Erfindung ist vorgesehen, dass Brenngas, welches aufgrund einer durchzuführenden Raildruckabsenkung aus dem Kraftstoff-Hochdruckspeicher 10 abgeführt werden muss, bevorzugt durch das Öffnen des Ventils 16 dem Gaszwischenspeicher 15 zugeführt wird.

In einer vorteilhaften Ausführungsform wird bei der Erreichung bzw. Überschreitung eines bestimmten Brenngas-Druckniveaus im Gaszwischenspeicher 15 aus diesem ein gewisses Quantum entnommen, um dieses der Gasbrennungskraftmaschine über das Saugrohr 13 zuzuführen bis zum Erreichen bzw. Unterschreiten eines bestimmten Brenngas-Druckniveaus. Derweil ein Teil der Brenngasversorgung über das Saugrohr 13 erfolgt, wird die über die Direkteinspritzung der Gasbrennkraftmaschine zugeführte Brenngasmenge entsprechend reduziert.

Bevorzugt ist das Ventil 16 derart ausgeführt, dass sein Durchlassverhalten mittels einer entsprechenden Ansteuerung dahingehend beeinflussbar ist, dass bei Bestehen einer bestimmten Druckdifferenz zwischen dem Brenngasvorkommen innerhalb des Kraftstoff-Hochdruckspeichers 10 und innerhalb des Gaszwischenspeichers 15 - unabhängig davon welchen Wert diese Differenz letztlich aufweist - unterschiedliche Volumenströme einstellbar sind. In einer möglichen Ausführungsform handelt es sich um ein Proportionalventil. Bevorzugt umfasst das erfindungsgemässe System eine Steuerung oder Regelung, die das Einstellen des Durchlassverhaltens des Ventils 16 vorgibt oder zumindest massgeblich beeinflusst. Selbiges trifft ebenso für das Ventil 17 und gleichermassen für die Kombination der Ventile 16, 17 zu. Klarerweise sind die Ventile 16 und 17 unabhängig voneinander einstellbar.

Eine mögliche Weiterbildung der Erfindung sieht das Zuführen von Brenngas in den Gaszwischenspeicher 15 nicht nur dann vor, wenn überschüssiges Brenngas aus dem Kraftstoff-Hochdruckspeicher 10 abgeführt werden muss. In einer ersten Ausführungsform kann sich eine in diesem Betriebsfall mögliche Kraftstoffzuführung in den Gaszwischenspeicher 15 über den Kraftstoff-Hochdruckspeicher 10 erstrecken. In jener Ausführungsform ist die Fluidverbindung zwischen dem Kraftstoff-Hochdruckspeicher 10 und dem Gaszwischenspeicher 15 vorzugsweise derart ausgeführt, dass ein steuerbares Ventil 16 zum Einsatz kommt, damit eine Einflussnahme über die Priorisierung der Kraftstoffverteilung (s.u.) möglich ist. In einer zweiten Ausführungsform kann sich eine in diesem Betriebsfall mögliche Kraftstoffzuführung in den Gaszwischenspeicher 15 über einen separaten Brenngaspfad erstrecken, der nicht durch den Kraftstoff-Hochdruckspeicher 10 verläuft (nicht eingezeichnet). Jene Ausführungsform bietet den Vorteil, dass das Zuleiten von Brenngas in den Gaszwischenspeicher 15 möglich ist, der keinen unmittelbaren Einfluss auf den Raildruck ausübt.

Eine solche Weiterbildung ermöglicht das Ausnutzen derjenigen Vorteile, die sich aufgrund der Möglichkeit ergeben können, dass ein Zuführen von Brenngas zu der Gasbrennkraftmaschine über den Luftverteiler 13 möglich ist und zwar alternativ oder additiv einer Brenngaszuführung über die Direkteinspritzung.

Der Vorteil der Erfindung tritt insbesondere bei einer solchen Kraftstoffanwendung ein, bei der jenes Brenngas unter einem erhöhten Druck in einem Kraftstoff-Hochdruckspeicher 10 bereitgehalten wird, wobei sich der Sollwert und dementsprechend der Istwert des sich in diesem Kraftstoff-Hochdruckspeicher 10 befindenden Brenngases in einem solchen Ausmass ändert, dass bei einer erforderlichen Druckabsenkung das Brenngas in einem solchen Ausmass aus dem Kraftstoff-Hochdruckspeicher 10 abgeführt werden muss, die es nicht zulässt, diesen im Zuge der Druckabsenkung regulär als Kraftstoff nutzen zu können. Vorzugsweise kommt die Erfindung für Gasbrennkraftmaschinen zum Einsatz, die mit einem solchen Kraftstoff betrieben werden, der gar nicht mehr bzw. nur unter einem erheblichen Aufwand dem Primärtank zurückgeführt werden kann/ könnte. Davon betroffen sind insbesondere Wasserstoffmotoren.

Die erfindungsgemässe Vorrichtung ermöglich nicht nur eine Wiederverwendung jenes überschüssigen Brenngases in seiner Kraftstofffunktion, sondern bietet je nach Art der Primärspeicherung des Kraftstoffes einen Mehrwert:
So kann das zuvor überschüssige Brenngas im Fall einer quasi transienten Steigerung des Brenngasbedarfs additiv zu dem über den regulären Brenngaszuführungspfad beziehbare Brenngas bereitgestellt werden. Dies bietet im Fall eines gasförmigen Kraftstoffes und einem sich dynamisch ändernden Kraftstoffbedarf einen hohen Mehrwert und zwar vor allem dann, wenn das Bereitstellen von Brenngas aus dem mitgeführten Kraftstoff eine solche Konditionierung erfordert, die einen gewissen Zeitversatz vom Entnehmen des Kraftstoffes aus dem Primärspeicher bis zum Vorliegen des Brenngases, welches mittels Verdichtung dem Kraftstoff-Hochdruckspeicher zugeführt werden kann. Ein Beispiel hierfür wäre das Mitführen von flüssigen organischen Wasserstoffträgern aus denen über einen Reformationsprozess Wasserstoff freigesetzt wird.

Unter Einsatz eines solchen Kraftstoffes, der zunächst konditioniert werden muss - bspw. durch eine Reformierung oder eine Vorwärmung - kann für das Starten der Gasbrennkraftmaschine und einen gewissen, sich unmittelbar daran anschliessenden Zeitraum die Brenngasversorgung der Anwendung zunächst aus jenem Vorrat erfolgen, der aus dem vormals überschüssigen Brenngas aufgebaut worden und noch vorhanden ist. Klarerweise kann die Funktionalität, die das sofortige Beziehen von Kraftstoff bei der Systemaktivierung ermöglicht, obgleich unmittelbar nach der entsprechenden Systemaktivierung das Beziehen von einsatzfähigem Kraftstoff aus der Primärspeicherung nicht möglich ist, anderweitig als durch die erfindungsgemässe Vorrichtung erzielt werden. Aber diesbezüglich muss betont werden, dass die Erfindung bereits jenen Vorteil ohne jeglichen apparativen Zusatzaufwand bietet.

Durch die voranstehend erwähnte Möglichkeit der substituierenden Brenngaszuführung ist ein eingeschränkter Weiterbetrieb der Verbrennungskraftmaschine möglich, wenn eine Brenngaszuführung über den Hochdruckpfad nicht mehr möglich ist.

**Bezugszeichenliste:**

| | |
|---|---|
| Kraftstoff-Hochdruckspeicher | 10 |
| Brennraum | 11 |
| Injektor zur Direkteinspritzung | 12 |
| Luftverteiler | 13 |
| Gaszwischenspeicher | 15 |
| Ventile | 16,17 |
| Turbine | 18 |
| Verdichter | 19 |

## Patentansprüche

1. Gasbrennkraftmaschine mit mindestens zwei Brennräumen (11), mindestens einem gemeinsam genutzten Kraftstoff-Hochdruckspeicher (10) zur Bereithaltung von Brenngas als Druckgas sowie Mitteln zur Direkteinspritzung des Brenngases aus dem Kraftstoff-Hochdruckspeicher (10) in die mindesten zwei Brennräume (11), wobei das Brenngas im Kraftstoff-Hochdruckspeicher (10) aus einem Primärtank bereitstellbar ist, wobei das Brenngas aus dem Primärtank entnehmbar und/oder aus einem aus dem Primärtank entnommenen Kraftstoff entlang eines Konversionspfads erzeugbar ist,
**dadurch gekennzeichnet,**
**dass** wenigstens ein mit dem Kraftstoff-Hochdruckspeicher (10) verbundener Gaszwischenspeicher (15) vorgesehen ist, um Brenngas aus dem Kraftstoff-Hochdruckspeicher (10) in den Gaszwischenspeicher (15) zum Zwecke einer Druckabsenkung im Kraftstoff-Hochdruckspeicher (10) abzuführen, und der Gaszwischenspeicher (15) ferner über einen separaten Brenngaspfad mit dem Luftansaugtrakt der Gasbrennkraftmaschine verbunden ist, über den Brenngas aus dem Gaszwischenspeicher (15) in den Luftansaugtrakt zuführbar ist.

2. Gasbrennkraftmaschine nach Anspruch 1, **dadurch gekennzeichnet, dass** mittels des Kraftstoff-Hochdruckspeichers (10) Brenngas in eine aktive Vorkammer einspritzbar ist.

3. Gasbrennkraftmaschine nach Anspruch 2, **dadurch gekennzeichnet, dass** die gesamte Brenngasmenge für die Direkteinspritzung in einen Brennraum (11) mittels eines sich durch die aktive Vorkammer erstreckenden Brenngaspfades zuführbar ist.

4. Gasbrennkraftmaschine nach einem der vorstehenden Ansprüche, **dadurch gekennzeichnet, dass** der Gaszwischenspeicher (15) jeweils über wenigstens ein Ventil (16, 17) mit dem Kraftstoff-Hochdruckspeicher (10) sowie dem Ansaugtrakt der Gasbrennkraftmaschine verbunden ist.

5. Gasbrennkraftmaschine nach Anspruch 4, **dadurch gekennzeichnet, dass** der Volumen- oder Massenstrom durch das zwischen Kraftstoff-Hochdruckspeicher (10) und Gaszwischenspeicher (15) angeordnete Ventil (16) und/oder durch das zwischen dem Gaszwischenspeicher (15) und dem Ansaugtrakt angeordnete Ventil (17) einstellbar ist.

6. Gasbrennkraftmaschine nach einem der vorstehenden Ansprüche, **dadurch gekennzeichnet, dass** der Gaszwischenspeicher (15) über wenigstens einen Verdichter mit dem Kraftstoff-Hochdruckspeicher (10) verbunden ist, vorzugsweise um das im Gaszwischenspeicher (15) verfügbare Brenngas in verdichteter Form an den Kraftstoff-Hochdruckspeicher (10) zurückzuführen.

7. Gasbrennkraftmaschine nach einem der vorstehenden Ansprüche, **dadurch gekennzeichnet, dass** der Gaszwischenspeicher (15) über einen separaten, nicht über den Kraftstoff-Hochdruckspeicher (10) geführten Brenngaspfad mit Brenngas befüllbar ist, insbesondere aus einem Primärtank.

8. Gasbrennkraftmaschine nach einem der vorstehenden Ansprüche, **dadurch gekennzeichnet, dass** eine Steuerung vorgesehen ist, die konfiguriert ist, den Brenngas-Massenstrom oder Brenngas-Volumenstrom vom Kraftstoff-Hochdruckspeicher (10) zum Gaszwischenspeicher (15) in Abhängigkeit des Drucks innerhalb des Kraftstoff-Hochdruckspeichers (10) zu regeln, insbesondere abhängig davon, ob der Ist-Druck im Kraftstoff-Hochdruckspeicher (10) größer oder gleich dem Soll-Druck oder größer als ein definierter Schwellenwert, der kleiner dimensioniert ist als jener Soll-Druck.

9. Gasbrennkraftmaschine nach Anspruch 8, **dadurch gekennzeichnet, dass** die Steuerung weiterhin konfiguriert ist, dass Öffnen des Ventils (16) zwischen Kraftstoff-Hochdruckspeicher (10) und Gaszwischenspeicher (15) nur dann zuzulassen, wenn der Druck im Gaszwischenspeicher (15) kleiner ist als der Druck im Kraftstoff-Hochdruckspeicher (10).

10. Gasbrennkraftmaschine nach Anspruch 8 oder 9, **dadurch gekennzeichnet, dass** die Steuerung weiterhin konfiguriert ist, dass Öffnen des strömungstechnisch zwischen dem Gaszwischenspeicher (15) und dem Ansaugtrakt (13) angeordneten Ventils (17) nur dann zuzulassen, wenn der Druck im Gaszwischenspeicher (15) höher ist als der Druck im Ansaugtrakt und/oder der Ist-Druck im Kraftstoff-Hochdruckspeicher (10) kleiner oder gleich dem Solldruck des Kraftstoff-Hochdruckspeichers (10) ist, besonders bevorzugt jener Ist-Druck seinen Sollwert um einen definierten Schwellenwert unterschritten hat.

11. Gasbrennkraftmaschine nach Anspruch 10, **dadurch gekennzeichnet, dass** der Schwellenwert dynamisch ist, insbesondere abhängig vom Ist-Druck im Gaszwischenspeicher (15) und/oder von der Differenz zwischen Ist- und Soll-Druck im Kraftstoff-Hochdruckspeicher (10) ist.

12. Gasbrennkraftmaschine nach einem der Ansprüche 9 bis 11, **dadurch gekennzeichnet, dass** die Steuerung weiterhin konfiguriert ist, die Einspritzmenge in den Ansaugtrakt in Abhängigkeit des angeforderten Lastmomentes der Maschine und/oder in Abhängigkeit des Füllstands des Gaszwischenspeichers (15) zu regeln, wobei eine Einspritzung in den Ansaugtrakt (13) insbesondere dann ausgeführt wird, wenn die aktuelle Sollabgabeleistung der Gasbrennkraftmaschine nicht über die Direkteinspritzung abgedeckt werden kann.

13. Gasbrennkraftmaschine nach einem der vorstehenden Ansprüche, **dadurch gekennzeichnet, dass** das Brenngas aus dem Gaszwischenspeicher (15) über den separaten Brenngaspfad in einen solchen Abschnitt des Luftansaugtrakts der Gasbrennkraftmaschine einleitbar ist, der Bestandteil des Luftversorgungspfads mehrerer Brennräume (11), vorzugsweise Bestandteil des Luftversorgungspfads sämtlicher Brennräume (11) ist, die funktional über einen gemeinsamen Luftverteiler (13) verfügen.

14. Gasbrennkraftmaschine nach Anspruch 13, **dadurch gekennzeichnet, dass** das Brenngas aus dem Gaszwischenspeicher (15) über den separaten Brenngaspfad in denjenigen Abschnitt des Luftansaugtrakts der Gasbrennkraftmaschine zuführbar ist, der dem Luftverteiler (13) entspricht.

15. Gasbrennkraftmaschine nach einem der Ansprüche 1 bis 12, **dadurch gekennzeichnet, dass** das Brenngas aus dem Gaszwischenspeicher (15) über den separaten Brenngaspfad in einen solchen Teilabschnitt des Luftansaugtrakts zuführbar ist, der dediziert zur Luftversorgung eines einzigen Brennraums (11) dient.

16. Gasbrennkraftmaschine nach einem der vorherigen Ansprüche, **dadurch gekennzeichnet, dass** es sich bei dem Brenngas um molekularen Wasserstoff oder ein überwiegend molekularen Wasserstoff enthaltendes Brenngasgemisch handelt.

17. Maschine, insbesondere mobile Maschine, vorzugsweise Arbeitsmaschine, mit wenigstens einer Gasbrennkraftmaschine nach einem der vorstehenden Ansprüche.
